# EUROPEAN PATENT SPECIFICATION

(11) **EP 2 210 406 B1**
(45) Date of publication and mention of the grant of the patent: **14.03.2012**
(21) Application number: 07846730.5
(22) Date of filing: 22.11.2007
(51) Int. Cl.: H04N 1/44

(54) **METHOD AND APPARATUS FOR SECURED FACSIMILE TRANSMISSION**
VERFAHREN UND VORRICHTUNG FÜR GESICHERTE FAXÜBERTRAGUNG
PROCÉDÉ ET APPAREIL PERMETTANT UNE TRANSMISSION SÉCURISÉE DE TÉLÉCOPIES

(43) Date of publication of application: 28.07.2010
(73) Proprietor: PURELLA AG, 6055 Alpnach Dorf (CH)
(72) Inventor: STEEGER, Gerd, 40599 Düsseldorf (DE)
(74) Representative: Fischer, Britta Ruth
(86) International application number: PCT/EP2007/010114
(87) International publication number: WO 2009/065423

(56) References cited:
- EP-A- 0 821 516
- US-A- 5 535 277
- US-A- 5 541 993
- US-A- 5 574 789
- US-A- 5 583 941
- US-A1- 2006 045 309
- US-A1- 2007 076 868

## Description

### Technical Field

The invention relates to a method for secured facsimile transmission according to the preamble of claim 1 and to an apparatus for secured facsimile transmission according to the preamble of claim 7. Generally, the present invention belongs to the field of telecommunication technologies.

### Background

Facsimile transmission is often replacing regular mail or delivery services such as UPS^{®} and FedEx^{®}, because it is fast and reliable and the recipient can receive a message within minutes instead of hours or even days or weeks. Often sensitive information such as for example in-house technical drawings, confidential financial or business data or private information needs to be transmitted by facsimile transmission. However, frequently a rather large group of people has access to a facsimile machine, e.g. in a large office or in a hotel. Hence, the possibility prevails that a person views the contents of an incoming facsimile previous to the actual intended recipient, which can result in a breach of secrecy.

Facsimile transmissions are usually performed via a public network according to a telecommunication standard defined by the ITU (International Telecommunication Unit) Telecommunication Standardization Sector (ITU-T), former CCITT (Comité consultatif international téléphonique et télégraphique). Transmissions according to this standard are - similar to plaintext - easy to read and thus easy to intercept, thereby assisting in industrial espionage.

Moreover, if a facsimile does not arrive at the intended recipient's because e.g. of a mistyping of his facsimile number, pressing of the wrong speed dial key, or an error in the telephone network, but does instead arrive at another recipient's, the transmitted data may go into the wrong hands.

Hence, there has been a need for secured facsimile transmission, in particular for secured facsimile transmission via a public telephone network.

From US-A-6 014 444 there is known an apparatus for encrypted communication. The apparatus may be a facsimile machine comprising a scanner unit for reading a document that is to be transmitted, a printer unit, a data processing unit, a data transmission unit with a modem and a control unit. The apparatus may also be a personal computer. Transmission data is transmitted and reception data is received by the data transmission unit via a telephone circuit. A CCD line image sensor of the scanner unit scans the document to read the data in a unit of lines. The data processing unit is constituted by a memory which stores the transmission and reception data, a compression/expansion circuit for compressing and expanding the data, an encryption/decryption circuit for encrypting the transmission data and for decrypting the reception data, and a data processing circuit. The memory allows for confidential reception. The compression/expansion circuit may compress the transmission data and expand the reception data based upon the MMR (modified modified read) encoding system and in addition upon the MH (modified Huffman) or MR (modified read) encoding system. The encryption/description circuit encrypts and decrypts the data using a predetermined cipher key. The control unit stores the cipher key in its RAM and is provided with a cipher key checking means. The facsimile machine of the receiving side receives, through the modem, the cipher text sent from the facsimile machine of the transmitting side, and the cipher text received is decrypted through the encryption/decryption circuit by using the cipher key and is restored to the initial data. The data restored to the initial state are decoded (expanded) by the compression/expansion circuit, and the decoded data are sent to the printer and are printed. The control unit checks whether an RTC (return to control) sign, i.e. a sign attached to the end of the compressed encoded data, is contained in transmitted 50 lines of decoded data or not.

US-A-5 692 048 discloses a method and an apparatus for sending secure facsimile transmissions and certified facsimile transmissions that provide for scanning a document into a first series of digital data values at a first location. The first series of data values are encrypted. Encrypted sets of data values are sent over a communications network to a second site. The encrypted data values are received and printed at the second site to produce an encrypted document. The encrypted data values can be recovered via scanning and then decryption. The data may also undergo compression and decompression.

In US-B1-6 950 213 a fax decoding/re-encoding apparatus is described, that comprises a decoder responsive to an encoded fax image defined by rows of scan lines, a scan line manipulation device and a re-encoder (re-compressor) for generating a re-encoded image. A run length presentation of scan lines is used rather than a bitmap representation. Every scan line can be represented as a sequence of run-lengths, i.e. an array or a list of integers representing lengths of alternating sequences of white or black pixels starting with a white run-length. Two-dimensional encoding employs two scan lines at any given time, a reference line and a coding line, that are generally the run-length encoding of the respective original bitmap scan lines.

EP-A-0 821 516 discloses a facsimile communication method and device for generating an image of a document, dividing dots of the image into units of a predetermined size and encrypting the image by changing the positions of units.

### Disclosure of the Invention

It is an object of the invention to provide a method and an apparatus for secured facsimile transmission which is compatible with existing conventional facsimile standards and protocols. It is a further object of the invention to provide a method and an apparatus for secured facsimile transmission which may employ conventional facsimile machines for sending and receiving of a facsimile. It is a still further object of the invention to provide a method and an apparatus for secured facsimile transmission that are configured such that only the intended recipient may view the received facsimile, i.e. other persons as the intended recipient may not view the received facsimile. It is a still further object of the invention to provide a method and an apparatus that are configured such that the risk of intercepting a transmission in a public network is minimized or even eliminated, while compatibility with the public network is maintained and user-friendliness is given.

In order to implement these and still further objects of the invention, which will become more readily apparent as the description proceeds, a method for secured facsimile transmission of a document is provided, which comprising the steps of generating at least one image of the document to be transmitted (step a)), reading the pixels of the at least one image into a series of blocks of predetermined size (step b)), converting the series of blocks into a character string based on a conversion table (step c)), encrypting the character string to create cipher data in form of an encrypted character string (step d)), compressing the encrypted character string to create a scrambled image (meaning a compressed image) in form of smaller data (step e)), and transmitting the scrambled image (step f)). For the creation of the scrambled image, in particular of a Huffman encoded image, the generated character string is converted back into an image, i.e. back to pixels. An option between a standard encryption mode and an optimized encryption mode is given, wherein in the standard encryption mode in step a) one image is generated from the entire document and in the optimized encryption mode in step a) a series of images is generated, each image corresponding to one line of the document to be transmitted, in step b) the pixels of each image of the series of images are read into a series of blocks of predetermined size, in step c) the series of blocks corresponding to each image are each converted into a character string, resulting in one character string per image and line, and in step d) only character strings corresponding to images and lines with at least one non-white pixel are encrypted. A line of a document may also be called a row of a document.

Furthermore, an apparatus for providing secured facsimile transmission of a document is provided, that comprises a transmission device for transmitting a facsimile of a document. The transmission device comprises image generation means for generating at least one image of the document, an encryption unit for generating an encrypted character string and compression means for compressing the generated character string to create a scrambled image to be transmitted. For the creation of the scrambled image the generated character string is converted back into an image, i.e. back to pixels. The encryption unit has a memory for storing the at least one image, conversion means for reading the pixels of the at least one image into a series of blocks of predetermined size and for converting the series of blocks into the character string based on a conversion table, and encryption means for encrypting the character string to create an encrypted character string. The encryption means are designed such that a standard encryption mode and an optimized encryption mode are provided. In the standard encryption mode one image is generated from the entire document by the image generation means. In the optimized encryption mode a series of images is generated by the image generating means, each image corresponding to one line of the document. The pixels of each image of the series of images are read into a series of blocks of predetermined size and the series of blocks corresponding to each image and each line are each converted into a character string by the conversion means, resulting in one character string per image and line. Only character strings corresponding to images and lines with at least one non-white pixel are then encrypted by the encryption means.

Hence, in the optimized encryption mode a character string of an image of a blank line of the document, i.e. of a line with only white pixels, is not encrypted before compression. Only character strings corresponding to lines with at least one black pixel are encrypted before compression in the optimized compression mode. Character strings corresponding to blank lines are left unencrypted which leads to an overall smaller and shorter image size, a high compression rate and hence a short transmission time. In the standard encryption mode all pixels of a line are encrypted, regardless whether they line consists only of white pixels or not.

Advantageously, any ordinary facsimile machine can be retrofitted with such an encryption unit to obtain the apparatus according to the invention. Also, a personal computer with appropriate software for transmitting facsimiles may be employed.

### Brief Description of the Drawings

Further advantageous features and applications of the invention can be found in the depending claims as well as in the following description of the drawings illustrating the invention. In the drawings like reference signs designate the same or similar parts throughout the several figures of which:
Figure 1 shows a block diagram of an embodiment of the apparatus of the invention,
Figures 2a and 2b show a flowchart illustrating the sending/transmitting of a document according to an embodiment of the method of the invention,
Figure 3 shows a flowchart illustrating the receipt of a document according to an embodiment of the method of the invention,
Figures 4a and 4b show a flowchart illustrating steps b) to d) of an embodiment of the method of the invention for the standard encryption mode and for the optimized encryption mode,
Figure 5 shows an illustrative example of a marker which may be added after the header of a facsimile according to an embodiment of the method of the invention,
Figure 6 shows an illustrative example of a facsimile generated with the method of the invention in the optimized encryption mode having a marker 200 being a border between a facsimile header (or banner) and its contents in form of a scrambled image,
Figure 7 shows another illustrative example of a facsimile generated with the method of the invention in the optimized encryption mode having a marker 200, and
Figure 8 shows an illustrative example of a facsimile generated with the method according to the invention in the standard encryption mode.

### Modes for Carrying out the Invention

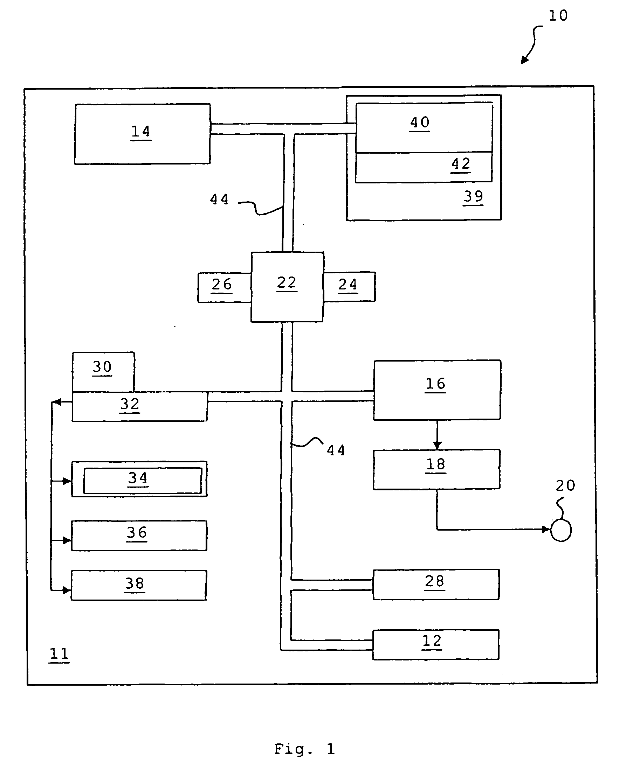

Figure 1 shows a preferred embodiment 10 of an apparatus for secured facsimile transmission according to the invention, the preferred embodiment being in the form of a facsimile machine 1. Of course also a personal computer (PC) may be employed as apparatus for secured facsimile transmission according to the invention.

The facsimile machine 10 comprises a scanner 12 for scanning documents to be transmitted (i.e. for image generation from documents to be transmitted). The scanner 12 represents image generating means and is able to read the pixels of a document to be scanned line by line. If a personal computer is used as apparatus for secured facsimile transmission then the reading of the pixels of a document is accomplished by means of an appropriate software program, preferably a scanner driver and/or printer driver to create, in particular, a TIFF (Tagged Image File Format) Group 3 image.

The facsimile machine 10 preferably comprises also a document feeder (not shown). It furthermore comprises a transmission device for transmitting/sending a facsimile and preferably a reception device for receiving a facsimile. In the depicted embodiment 10 the transmission device and the reception device are exemplarily formed by one transmission and reception device 11. However, they may be separate devices.

The transmission device comprises compression means and the reception device comprises expansion means. If a transmission and reception device 11 is used, then the compression means and the expansion means are preferably formed by compression and expansion means 14, i.e. they are integrated in one unit. The compression means and/or expansion means may be formed by an electronic circuit and/or a software program. They may each or together be constructed as a separate module. The compression means and expansion means are preferably constructed such that they can compress and expand data according to the MR (modified read) or MH (modified Huffman) encoding, which makes it possible to transmit a scrambled image generated by the compression means in accordance with the CCITT regulations. The MR or MH encoding can be compared to a conventional analog-to-digital conversion by analogy. The compression level preferably depends on the complexity of the scanned image of the document to be transmitted.

The transmission and reception device furthermore comprises a modem 16 which is connected via a network control unit 18 to a telephone line 20. A modem 16 is a device that modulates an analog carrier signal to encode digital information, and also demodulates such an analog carrier signal to decode the transmitted information. For connection with the telephone line 20 the modem 16 is preferentially a so-called voice band modem that turns digital information into sounds (i.e. analog signals), that can be transmitted over the telephone line 20, and converts received analog signals into digital signals that can be handled by the transmission and reception device 11. For transmitting data, a compression is performed by the compression means 14 to generate a scrambled image which is then send/transmitted by the modem 16 and the network control unit 18 via the telephone line 20. When receiving data from the modem 16, the expansion means 14 of the reception device 11 expands or decompresses, respectively, the received data. If a personal computer is used as an apparatus for secured facsimile transmission a so-called facsimile modem may be used.

The modem 16 and the network control unit 18 are preferably connected to a central control unit 22, in particular a central processing unit (CPU), which is part of the transmission and reception device 11. The central control unit 22 comprises a processor, in particular a microprocessor, and a memory, which preferentially consists of a random-access-memory (RAM) 24 and a read-only-memory (ROM) 26.

Furthermore, the facsimile machine 10 includes a printer 28 to create at least one hard copy of the received facsimile. The printer 28 may for example be a thermal, laser, inkjet or dot matrix printer. Furthermore, the transmission and reception device 11 comprises a power supply 30 and an operation panel 32 (also called user interface). The operation panel 32 comprises a display 34 for displaying user input requests or messages and a keyboard 36 for user inputs, in particular for the input of characters by the user. Optionally a card reader 38 can be connected with the operation panel 32 e.g. to read in a secret key (also called private key) of a public key encryption system. If a personal computer is used as apparatus for secured facsimile transmission, a user interface or operational panel may comprise interface devices such as a monitor, a keyboard, a mouse and/or any other input/output devices.

The transmission device of the apparatus 10 further has an encryption unit for generating an encrypted character string. The transmission device has a decryption unit for decrypting a received scrambled image. The encryption unit and the decryption unit can be integrated in one encryption and decryption unit 39, which forms part of the facsimile and reception device 11. The encryption unit or/and the decryption unit can be designed as a separate module. The encryption unit comprises a memory 42 for storing at least one scanned image of the document to be transmitted, conversion means (not shown) for reading the pixels of the at least one image of the document to be transmitted into a series of blocks of predetermined size and for converting the series of blocks into a character string based on a conversion table, and encryption means for encrypting the character string to create an encrypted character string. The conversion table is preferably stored in the memory 42 or in the conversion means itself. The decryption unit comprises a memory 42 and decryption means for decrypting the character string and conversion means for converting the decrypted character string to an image of the transmitted document. If the encryption unit and the decryption unit are integrated in the same encryption and decryption unit 39, then they preferably share the same memory 42, and their conversion means are integrated in one conversions mean and the encryption means and the decryption means are integrated in one encryption and decryption means 40. The memory 42 is preferably a random-access-memory (RAM) and assists, preferentially exclusively, the encryption/decryption means and/or the conversion means.

The encryption and decryption unit 39 with its memory 42 enables the image encryption procedure and secured facsimile transmission. If the apparatus 10 is designed as a facsimile machine, the encryption means and/or the decryption means and/or the respective conversion means may be constructed as electronic circuits. If the apparatus 10 is designed as personal computer, the encryption means and/or the decryption means and/or the respective conversion means may be realized by one or more software programs.

The central control unit 22 controls and/or receives inputs from at least the scanner 12, the printer 28, the operation panel 32, the compression means, the expansion means, the encryption unit, the decryption unit (or directly from the encryption means and the decryption means and/or the not-shown respective conversion means) and the modem 16 via lines 44. It furthermore controls and has access to the RAM 24 and the ROM 26.

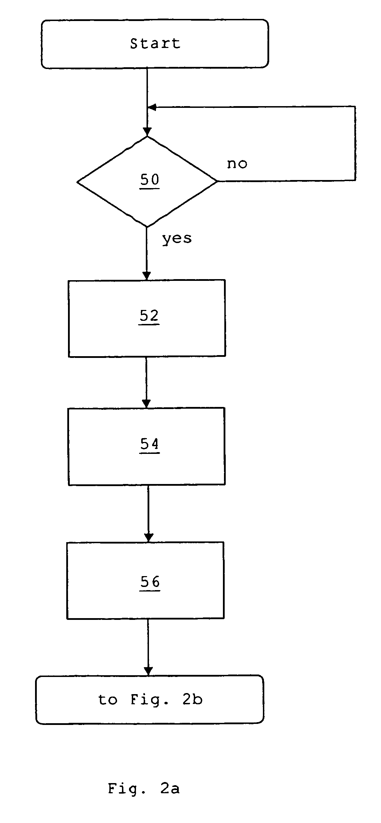

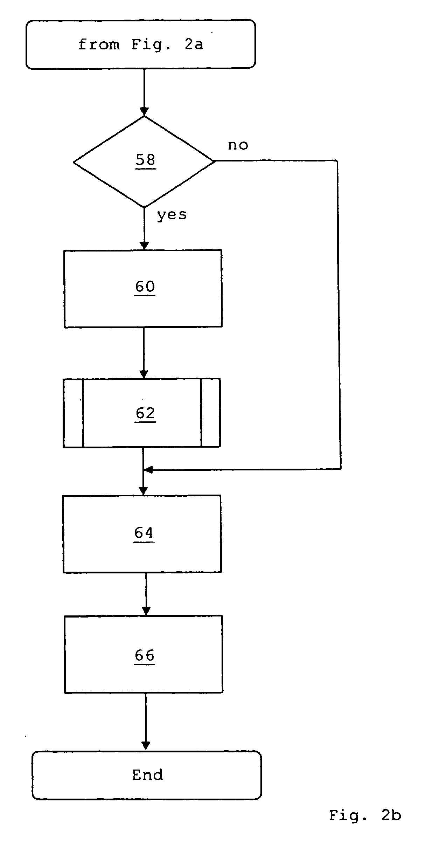

Figures 2 to 4 show flowcharts illustrating a preferred embodiment of the method for secured facsimile transmission according to the invention. Figures 2a and 2b show a flowchart illustrating the sending/transmitting of a document.

In decision step 50 it is checked whether a document has been inserted in a document feeder (also called page feeder) of the apparatus 10 according to the invention. If no document has been inserted, then the method waits for the insertion of a document to be transmitted. If a document has been inserted then the method proceeds to input step 52 and waits for a user input by outputting appropriate requests on the display 34 of the operational panel 32. The user can in step 52 choose between the standard encryption mode and the optimized encryption mode, for example by pressing an specific function key (e.g. F7) on the operational panel 32 if he wants the document to be transmitted in optimized encryption mode or by pressing "0" for selecting the standard encryption mode and "1" for selecting the optimized encryption mode.

Further, the user is in step 52 preferably requested to indicate, if he wants a secured transmission or not, in particular if the first page of the document is to be transmitted is a cover page (i.e. shall be transmitted non-secured) or not. This can also be done by pressing appropriate keys on the keyboard 56 of the operational panel 52, e.g. "1" if the user wants no secured transmission (e.g. if the first page is a cover page) and "0" if the user wants a secured transmission (e.g. if the first page is not a cover page). If the user chooses the non-secured transmission (e.g. if the user characterizes the first page as cover page), then no encryption will take place (e.g. the first page will not be encrypted).

Moreover, the user is in step 52 preferably requested to input a password (private key, secret key), which he has agreed upon with the recipient, or a public key. The security of the transmission depends on the strength of the password. The pre-determined password may be communicated to the recipient via a separate and secure way of communication. Of course, it may be changed at any time, e.g. for security reasons. If an symmetric-key algorithm/system is used for encryption then the password exchange with the recipient is only necessary once, as the next time the same user and recipient want to securely transmit a document a list with several passwords may be sent to the recipient (or from the recipient to the user) via secured facsimile transmission. Alternatively to the selection of a password by the user, a public key algorithm/system may be implemented. Here, the recipient has a public key which can be known by anybody and a private key (secret key) which is unknown by others. Only the private key enables the recipient to open/access the transmitted facsimile. However, when public keys are used, the possibility of key escrow exists, i.e. the employed cryptographic system/algorithm can hold a so-called "backdoor password" by which normal authentication can be bypassed. As examples the so-called clipper cryptographic system and the financing software Quicken are mentioned. If, on the other hand, symmetric key management is used as suggested herein, then key escrow is not possible.

After the user has given the required inputs in step 52, in step 54 the transmission device will dial up and try to initiate and establish a connection with the reception device, to which the document shall be transmitted, via the modem 16 and the network control unit 18. A communications channel between the transmission device and the reception device is then built up (so-called negotiation phase).

After a communication channel has been built up, in step 56 the document to be transmitted is scanned line-by-line by the scanner 12 until the entire document has been scanned to create an image of the document (preferably a Group 3 TIFF image) in accordance with the CCITT regulations. This image is still uncompressed and is given by digital image data (pixels).

In decision step 58 it is checked whether the user has chosen a non-secured transmission in input step 52, as for example for a cover page. If a non-secured transmission has been chosen, then the method will move to step 64 and the created image is transmitted to the reception device of the recipient with no encryption taking place but after it has been compressed by the compression means, creating a scrambled/compressed image, in particular a Huffman encoded image.

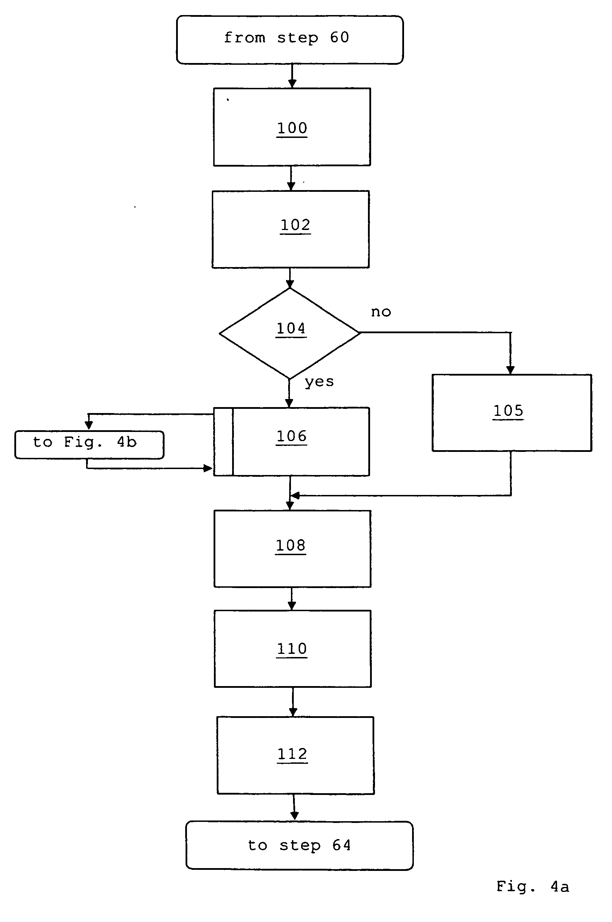

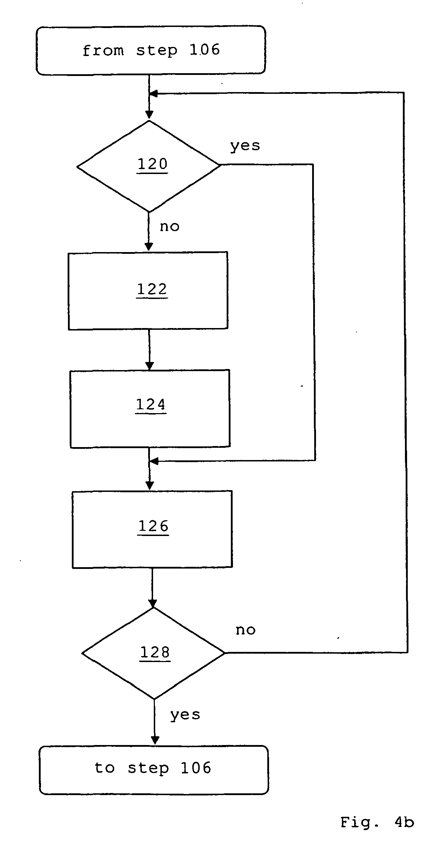

If, however, the user has indicated in step 52 that he wants secured transmission, the image of the document is moved to and stored in the memory 42 of the encryption unit, preferably being a random-access-memory (RAM), in step 60. In step 62 the stored image is processed by the encryption unit 39, in that the pixels of the image are read into a series of blocks of predetermined size, the series of blocks is converted into a character string based on a conversion table and the character string is encrypted to create an encrypted character string. Step 62 will be described in detail with respect to Figures 4a and 4b.

In step 64 the encrypted character string is compressed by the compression means after it has been converted to pixels, thereby creating a scrambled image of the document, preferably a TIFF Group 3 image. The scrambled image is then transmitted to the reception device by the network control unit 18. In step 66 the settings set in input 52, in particular regarding the secured transmission, are reset to their initial values.

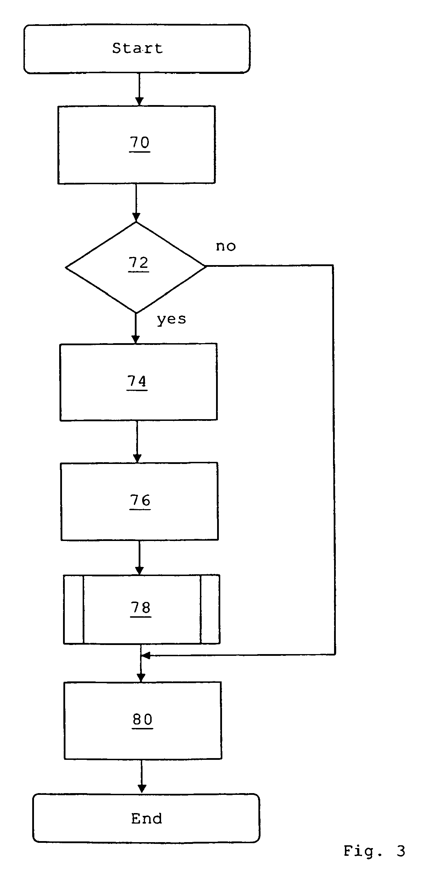

Figure 3 shows a flowchart illustrating the receipt of a document according to an embodiment of the method according to the invention. Thus, Figure 3 depicts the receiving side. In step 70 the reception device waits and recognizes ring and handshake of the transmission device (i.e. its modem/network control unit). After a communication channel with the transmission device has been established the transmitted data (facsimile) in form of a scrambled image of the document is received. The scrambled image is then expanded by the expansion means.

In decision step 72 it is determined if the transmission has been a secured transmission or not. If it is determined that no secured transmission has taken place, then the method proceeds directly to step 80 and prints the expanded scrambled image on the printer 28. If it is determined that a secured transmission has taken place, then the method proceeds to step 74 and the expanded scrambled image is stored in the specific, allocated memory 42, to which the decryption unit has access. The expanded scrambled image has the form of a character string. For further processing of this character string, which is encoded, the user is requested to input a password in step 76. If the password is correct, then the character string is processed in step 78 by the decryption unit, i.e. the character string is decrypted by the decryption means of the decryption unit and then the decrypted character string is converted to an image of the transmitted document by the conversion means. This image is then in step 80 printed out as legible copy. The processing performed by the decryption unit basically corresponds to the reverse of the processing performed by the encryption unit which is described in the following with reference to Figures 4a and 4b.

Figures 4a and 4b show a flowchart illustrating steps b) to d) of an embodiment of the method according to the invention for the standard encryption mode and for the optimized encryption mode.

After the scanned image has been moved in step 60 (confer Figure 2b) into the memory 42, in step 100 the password is hashed into a secure 20 character long string (20 characters x 8 bits/character = 160 bits). This 20 character long string may preferably comprise all 256 characters of the ASCII table. A hash algorithm like e.g. the SHA-1 (Secure Hash Algorithm 1) may be used for hashing the password, which usually is given by a combination of characters that are accessible on a keyboard (i.e. a combination out of 96 characters), into a 20 byte long string which is combined out of all characters of the ASCII table. For a 160 bit long key there are 2^160 possibilities. Of course, other hash algorithms may be used.

The next step 102 represents the starting point of the encryption process performed by the encryption unit, in which each line of at least one image, i.e. the pixels of each line, is read to 8-bit blocks, creating a series of blocks. Each 8-bit block is then converted by bit shifting into an ASCII character, in particular an 8-bit ASCII character, by the conversion means, thereby creating an ASCII character string. A character is typically represented by 8 bits or 1 byte, respectively. The standard facsimilie lines on an 8.5 inch (21.59 cm) wide page are each represented by 1728 pixels which are converted into 216 characters or bytes, independently if US letter size or DIN A4 are used as format. The number of lines varies, but usually is 1024 for US letter size or according to TIFF Group 3, which is currently provided by most facsimile machines. The encryption process differs depending on the choice of encryption mode.

In decision step 104 it is determined if the user has chosen in step 52 the standard encryption mode or the optimized encryption mode. Step 105 relates to the standard encryption mode. In the standard encryption mode, the entire document to be transmitted is scanned at once, thereby scanning all lines of the document immediately. All of the pixels of all of the lines are read line-by-line into 8-bit blocks and converted into one character string, regardless whether a line comprises only white pixels or not. The 216 characters of a subsequent line are added to the character string containing the characters corresponding to the preceding lines until all lines are read and converted into characters, thereby creating one character string. The number of lines varies, but usually is 1024. With 216 characters per line and 1024 lines, there are 221184 characters or bytes, respectively, resulting in a character string with a length of 221184 bytes. If the number of lines is equal to the variable L, then the length of the character string is 216 x L. The character string is then encrypted by an appropriate encryption algorithm employed by the encryption means. The encryption algorithm may be any already known, established encryption algorithm. The standard encryption mode offers a higher security level than the optimized encryption mode.

If the optimized encryption mode is chosen, in step 106 a series of images is generated from the document to be transmitted, each image corresponding to one line of the document, the pixels of each image are read into 8-bit blocks and the 8-bit blocks are converted into a character string, resulting in one character string per image and line. The operations performed in step 106 are further explained in detail in steps 120 to step 128 of Figure 4b, step 122 being explained later.

In step 120 it is determined if the character string currently processed corresponds to a blank line, i.e. if the character string consists of 216 times the character "0". Character strings which correspond to lines with exclusively white pixels are not encrypted; i.e. only character strings corresponding to images/lines with at least one non-white pixel are encrypted in step 124 by the encryption means using preferably an established encryption algorithm to create an encrypted character string. Blank lines are not encrypted. The character strings are consecutively added up in step 126. I.e. encrypted character strings corresponding to non-blank lines and non-encrypted character string corresponding to blank lines, which entirely consist of the character "0", are added up in the order in which they appear to form one character string. In step 128 it is checked if the last line of the image has been reached and processed.

The compression of the final character string (after it has been converted back into pixels, i.e. a series of bits) which takes place in step 64 (confer Figure 2b), which is preferentially performed according to MH (modified Huffman) encoding, is due to the nature of the final character string efficient, leading to a small facsimile size and to a short transmission time. MH encoding works efficient if many pixel blocks are either white or black. A run length of 951 white pixels corresponds to a make up code of "0 1101 0011" and a termination code of "0101 1000", being much shorter than 951 bits. Preferably the run length is kept in accordance with the MH (modified Huffman) regulations. Alternatively, for example MR (modified read) encoding may be used for compression. Compression performed by MH or MR encoding ensures that a facsimile is transmitted in accordance with CCITT regulations.

When the character string corresponding to an image of a line with not only white pixels is encrypted, then the password is preferably extended by a string, which is generated based on the number of that specific line. In step 120 (confer Fig. 4b) it has been determined if the character string currently processed corresponds to a blank line, i.e. if the character string consists of 216 times the character "0". If this is not the case, then in step 122 (which is performed being step 120 and step 124) a pseudo number is calculated on the basis of the current line/row number. This pseudo number is hashed, preferably by the same hashing algorithm as the password, and added to the hashed password. If the password is not extended in such a way, the facsimile may show a particular pattern which is readable to anyone although encryption has taken place.

For encryption preferentially a symmetric key management algorithm/system with a variable key size stream cipher is used. Preferably the RC4 (Ron's code 4) algorithm is used for encryption of the character string by the encryption means. Of course, other suitable encryption/cryptographic algorithms, such as e.g. the so-called Blowfish, may be used. The RC4 algorithm is basically immune to differential and linear cryptographic analysis. The RC4 algorithm offers 2^1700 (256 x 256^2) different states and is a very fast algorithm.

In order to determine where a possible header of a facsimile ends and where the actual document or message begins, a marker 200 is preferentially created in step 108 (confer Figure 4a). In step 110 the encrypted character string representing the document is then added to the marker 200 or vice versa such, that the marker 200 is positioned at the beginning or before the encrypted character string, respectively. The marker 200 may be any bit pattern, in particular in form of a string.

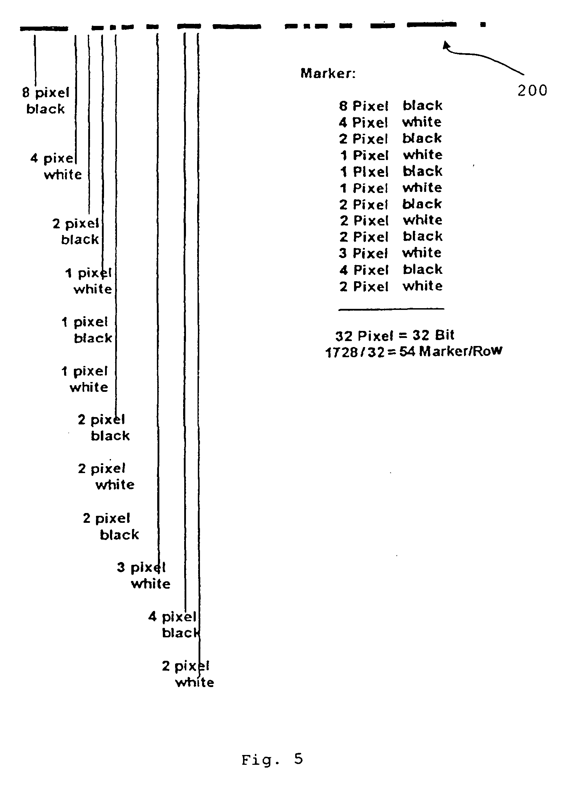

Fig. 5 shows an example of a 32-bit marker 200. In step 112 the encrypted character string with the marker 200, which basically is an ASCII character string, is converted back to pixels, which are then compressed and transmitted in step 64, preferably with the resolution set to 200 dpi.

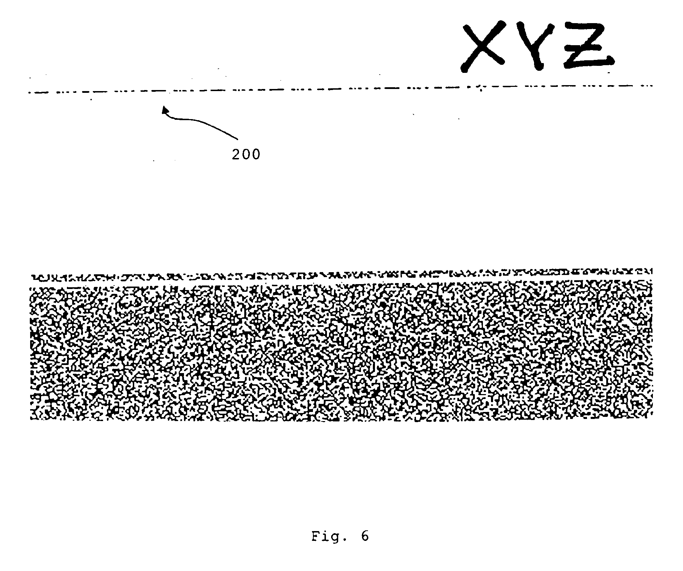

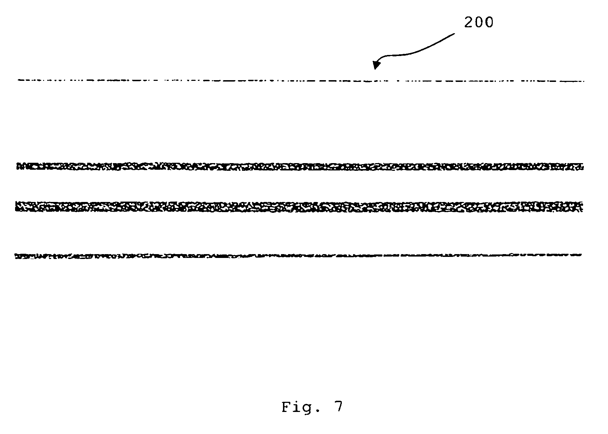

In Figures 6 and 7 illustrative examples of received facsimiles, which have been generated in optimized encryption mode, are depicted. In Figure 6 the document has been sent with a header "XYZ" which has not been encrypted and a marker 200 has been added. In Figure 7 the document has been sent without a header over the public network with a marker 200 at the its beginning.

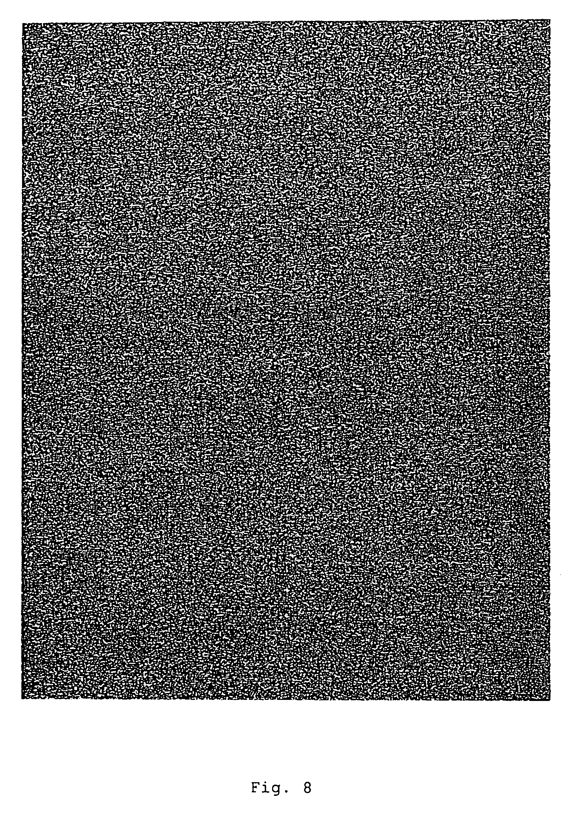

Figure 8 shows an illustrative example of a received facsimile, which has been generated in the standard encryption mode, but which has not been expanded and decrypted by the decryption unit, as the recipient did not input the correct password or did not use the correct hardware. The entire image is still scrambled and not expanded and so is the printout. It cannot be read.

In the present invention the transmission device and/or the reception device may be facsimile machines and/or personal computers (PCs) which have the capacity of transmitting and/or receiving a facsimile according to an established facsimile transmission standard. The same holds true for the apparatus according to the invention.

The method and the apparatus according to the invention have the advantages of being easy to handle by a user and easy to implement by the facsimile machine industry. As the images of the documents, which preferably are TIFF Group 3 images, are still encoded in accordance with the CCITT regulations, the method and the apparatus of the invention can be combined with existing facsimile machines. Moreover, existing facsimile machines can be easily rebuilt to the apparatus according to the invention (or its transmission and/or reception device) by adding an encryption/decryption unit. Certification is guaranteed as existing facsimile machines can confirm that the transmitted documents were received properly.

For decryption there is no need to print out the received facsimile, scan in the print-out and then decrypt it in order to be able to read it. Decryption can be done directly by the decryption unit. A fax header may remain unencrypted, so that is stays readable. The user can preferably choose if he wants to have the first page, which quite often is a cover page, to become encrypted or not.

Preferably the reception device keeps the facsimile stored in a specific memory until the intended recipient inputs the correct password, for example by pressing a specific function key. Hence, there is no need to agree on a specific time for sending the facsimile, at which the recipient has to be present at the reception device, which may be very inconvenient, in particular if the reception device is occupied by several people.

The method according to the invention advantageously allows the user to choose between two different modes of encryption. The first encryption mode is the standard encryption mode wherein the entire image of a document becomes encrypted regardless whether there are blank lines, i.e. lines with exclusively white pixels. The standard encryption mode offers a high, if not the highest, level of security. The second encryption mode is the optimized encryption mode, wherein the encryption unit/means takes into consideration if a line of a scanned image consists only of white pixels or not. The lines with exclusively white pixels are not encrypted.

It is to be understood that while certain embodiments of the present invention have been illustrated and described herein, it is not to be limited to the specific embodiments described and shown.

## Claims

1. A method for secured facsimile transmission of a document, comprising the steps of:
a) generating at least one image of said document,
b) reading the pixels of said at least one image into a series of blocks of predetermined size,
c) converting said series of blocks into a character string based on a conversion table,
d) encrypting said character string to create an encrypted character string,
e) after it has been converted to pixels compressing said encrypted character string, thereby creating a scrambled image, and
f) transmitting said scrambled image,
**characterized in that** the method further comprises the step of selecting between a standard encryption mode and an optimized encryption mode, wherein in the standard encryption mode in step a) one image is generated from the entire document and in the optimized encryption mode in step a) a series of images is generated, each image corresponding to one line of the document, in step b) the pixels of each image of said series of images are read into a series of blocks of predetermined size, in step c) said series of blocks corresponding to each image are each converted into a character string, resulting in one character string per image, and in step d) only character strings corresponding to images with at least one non-white pixel are encrypted.

2. The method according to claim 1, further comprising the step of hashing a password for encrypting said character string.

3. The method according to claim 1 or 2, further comprising the step of generating a marker (200).

4. The method according to any of the preceding claims, further comprising the step of providing an option between a secured facsimile transmission and an unsecured facsimile transmission.

5. The method according to any of the preceding claims, further comprising the step of receiving a scrambled image, wherein said received scrambled image is stored in an allocated memory (42), said received scrambled image is expanded into a character string, said character string is decrypted, and the decrypted character string is converted to an image of a document.

6. The method according to claim 5, wherein a password is requested from a user and verified before expanding said received scrambled image into a character string.

7. An apparatus for providing secured facsimile transmission of a document, comprising a transmission device (11) for transmitting a facsimile of a document, said transmission device (11) comprising image generation means (12) for generating at least one image of said document, an encryption unit (39) for generating an encrypted character string and compression means (14) for compressing said generated character string after converting it to pixels to create a scrambled image to be transmitted, wherein said encryption unit (39) has a memory (42) for storing said at least one image, conversion means for reading the pixels of said at least one image into a series of blocks of predetermined size and for converting said series of blocks into the character string based on a conversion table, and encryption means (40) for encrypting said character string to create an encrypted character string,
**characterized in that** said encryption means (40) are adapted to enable selection between a standard encryption mode, wherein one image is generated from the entire document by the image generation means (12), and an optimized encryption mode wherein a series of images is generated by the image generating means (12), each image corresponding to one line of the document, the pixels of each image of said series of images are read into a series of blocks of predetermined size and said series of blocks corresponding to each image are each converted into a character string by the conversion means, resulting in one character string per image, and only character strings corresponding to images with at least one non-white pixel are encrypted by the encryption means (40).

8. The apparatus according to claim 7,
wherein said transmission device (11) further comprises a central control unit (22), in particular a central processing unit.

9. The apparatus according to claim 7 or 8, further comprising a reception device (11) for receiving a facsimile of a document, said reception device (11) comprising a memory (42) for storing a scrambled image received, expansion means (14) for expanding said received scrambled image into a character string, decryption means (40) for decrypting said character string, conversion means for converting the decrypted character string to an image of the document and printing means (28) for printing said image of the document.

10. The apparatus according to claim 9,
wherein said reception device (11) further comprises a central control unit (22), in particular a central processing unit.

## Patentansprüche

1. Ein Verfahren für die gesicherte Faksimileübertragung eines Dokuments, umfassend die Schritte:
a) Erzeugen von mindestens einem Abbild des genannten Dokuments,
b) Lesen der Pixel von genanntem mindestens einem Abbild in eine Serie von Blöcken vorbestimmter Grösse,
c) Konvertieren der genannten Serie von Blöcken in eine Zeichenfolge basierend auf einer Konvertierungstabelle,
d) Verschlüsseln der genannten Zeichenfolge zur Erzeugung einer verschlüsselten Zeichenfolge,
e) nachdem sie zu Pixeln konvertiert worden ist, Komprimieren der genannten verschlüsselten Zeichenfolge, dabei ein verwürfeltes Abbild erzeugend, und
f) Übertragen des genannten verwürfeltes Abbildes,
**dadurch gekennzeichnet, dass** das Verfahren weiter den Schritt umfasst, zwischen einem Standardverschlüsselungsmodus und einem optimierten Verschlüsselungsmodus zu wählen, wobei in dem Standardverschlüsselungsmodus in Schritt a) ein Abbild von dem gesamten Dokument erzeugt wird und in dem optimierten Verschlüsselungsmodus in Schritt a) eine Serie von Abbildern erzeugt wird, wobei jedes Abbild einer Zeile des Dokuments entspricht, in Schritt b) die Pixel von jedem Abbild der genannten Serie von Abbildern in eine Serie von Blöcken vorbestimmter Grösse gelesen werden, in Schritt c) die genannte Serie von Blöcken, die jedem Abbild entspricht, jeweils in eine Zeichenfolge konvertiert wird, resultierend in einer Zeichenfolge pro Abbild, und in Schritt d) nur Zeichenfolgen, die Abbildern mit zumindest einem nicht-weissen Pixel entsprechen, verschlüsselt werden.

2. Das Verfahren gemäss Anspruch 1, weiter umfassend den Schritt des Zerhackens eines Passworts zum Verschlüsseln der genannten Zeichenfolge.

3. Das Verfahren gemäss Anspruch 1 oder 2, weiter umfassend den Schritt des Erzeugens einer Markierung (200).

4. Das Verfahren gemäss einem der vorhergehenden Ansprüche, weiter umfassend den Schritt, eine Möglichkeit zwischen einer gesicherten Faksimileübertragung und einer ungesicherten Faksimileübertragung bereitzustellen.

5. Das Verfahren gemäss einem der vorhergehenden Ansprüche, weiter umfassend den Schritt ein verwürfeltes Abbild zu empfangen, wobei das genannte empfangene verwürfelte Abbild in einem zugewiesenen Speicher (42) gespeichert wird, das genannte empfangene verwürfelte Abbild in eine Zeichenfolge expandiert wird, die genannte Zeichenfolge entschlüsselt wird, und die entschlüsselte Zeichenfolge zu einem Abbild eines Dokuments konvertiert wird.

6. Das Verfahren gemäss Anspruch 5, wobei ein Passwort vom Benutzer angefordert und verifiziert wird, bevor das genannte empfangene verwürfelte Abbild in eine Zeichenfolge expandiert wird.

7. Eine Vorrichtung zur Bereitstellung einer gesicherter Faksimileübertragung eines Dokuments, umfassend ein Übertragungsgerät (11) zum Übertragen eines Faksimiles eines Dokuments, wobei das genannte Übertragungsgerät (11) Abbilderzeugungsmittel (12) zur Erzeugung von mindestens einem Abbild des genannten Dokuments, eine Verschlüsselungseinheit (39) zur Erzeugung einer verschlüsselten Zeichenfolge und Komprimierungsmittel (14) zum Komprimieren der genannten erzeugten Zeichenfolge, nachdem sie zu Pixeln konvertiert worden ist, zum Erzeugen eines zu übertragenden verwürfelten Abbildes umfasst, wobei die genannte Verschlüsselungseinheit (39) einen Speicher (42) zum Speichern des genannten mindestens einen Abbildes, Konvertierungsmittel zum Lesen der Pixel des genannten mindestens einen Abbildes in eine Serie von Blöcken vorbestimmter Grösse und für die Konvertierung der genannten Serie von Blöcken zu einer Zeichenfolge basierend auf einer Konvertierungstabelle und Verschlüsselungsmittel (40) zum Verschlüsseln der genannten Zeichenfolge zum Erzeugen einer verschlüsselten Zeichenfolge aufweist,
**dadurch gekennzeichnet, dass** die genannten Verschlüsselungsmittel (40) geeignet sind, eine Auswahl zwischen einem Standardverschlüsselungsmodus, in welchem ein Abbild von dem gesamten Dokument mittels der Abbilderzeugungsmittel (12) erzeugt wird, und einem optimierten Verschlüsselungsmodus, in welchem eine Serie von Abbildern mittels der Abbilderzeugungsmittel (12) erzeugt wird, wobei jedes Abbild einer Zeile des Dokuments entspricht, die Pixel von jedem Abbild der genannten Serie von Abbildern in eine Serie von Blöcken vorbestimmter Grösse gelesen werden und die genannte Serie von Blöcken, die jedem Abbild entspricht, jeweils mittels der Konvertierungsmittel zu einer Zeichenfolge konvertiert wird, resultierend in einer Zeichenfolge pro Abbild, und nur Zeichenfolgen, die Abbildern mit zumindest einem nicht-weissen Pixel entsprechen, mittels der Verschlüsselungsmittel (40) verschlüsselt werden, zu ermöglichen.

8. Die Vorrichtung gemäss Anspruch 7, wobei das genannte Übertragungsgerät (11) weiter eine zentrale Steuereinheit (22), insbesondere eine zentrale Prozessoreinheit, umfasst.

9. Die Vorrichtung gemäss Anspruch 7 oder 8, weiter umfassend ein Empfangsgerät (11) zum Empfangen eines Faksimiles eines Dokuments, wobei das genannte Empfangsgerät (11) einen Speicher (42) zum Speichern eines empfangenen verwürfelten Abbildes, Expandierungsmittel (14) zum Expandieren des genannten empfangenen verwürfelten Abbildes zu einer Zeichenfolge, Entschlüsselungsmittel (40) zum Entschlüsseln der genannten Zeichenfolge, Konvertierungsmittel zum Konvertieren der entschlüsselten Zeichenfolge zu einem Abbild des Dokuments und Druckmittel (28) zum Drucken des genannten Abbildes des Dokuments umfasst.

10. Die Vorrichtung gemäss Anspruch 9, wobei das genannte Empfangsgerät (11) weiter eine zentrale Steuereinheit (22), insbesondere eine zentrale Prozessoreinheit, umfasst.

## Revendications

1. Méthode de transmission par télécopie sécurisée d'un document, comprenant les étapes consistant à:
a) générer au moins une image dudit document,
b) lire les pixels de ladite au moins une image dans une série de bloques de taille prédéterminée,
c) convertir lesdites séries de bloques en une chaine de caractères basé sur une table de conversion,
d) crypter ladite chaine de caractères afin de créer une chaine de caractères cryptée,
e) comprimer ladite chaine de caractères cryptée après l'avoir converti en pixels et, par cela, créer une image brouillée, et
f) transmettre ladite image brouillée,
**caractérisée en ce que** la méthode comprend en outre l'étape consistant à sélecter entre un mode de cryptage standard et un mode de cryptage optimisé, dans le mode de cryptage standard une image étant générée à partir du document entier dans l'étape a) et dans le mode de cryptage optimisé une série d'images étant générée dans l'étape a), chaque image correspondant à une ligne du document, dans l'étape b) les pixels de chaque image de ladite série d'images étant lue dans une série de bloques de taille prédéterminée, dans l'étape c) ladite série de bloques correspondant à chaque image étant chacune convertie en une chaine de caractères, résultant en une chaine de caractères par image, et dans l'étape d) uniquement des chaines de caractères correspondant à des images avec au moins un pixel non-blanc étant cryptées.

2. Méthode selon la revendication 1, comprenant en outre l'étape de hachage d'un mot de passe afin de crypter ladite chaine de caractères.

3. Méthode selon la revendication 1 ou 2, comprenant en outre l'étape consistant à générer un marqueur (200).

4. Méthode selon l'une des revendications précédentes, comprenant en outre l'étape consistant à prévoir une option entre une transmission par télécopie sécurisée et une transmission par télécopie non sécurisée.

5. Méthode selon l'une des revendications précédentes, comprenant en outre l'étape consistant à recevoir une image brouillée, ladite image brouillée reçue étant enregistrée dans une mémoire (42) allouée, ladite image brouillée reçue étant développée en une chaine de caractères, ladite chaine de caractères étant décryptée, et la chaine de caractères décryptée étant convertie en une image d'un document.

6. Méthode selon la revendication 5, un mot de passe étant demandé d'un utilisateur et vérifié avant développer ladite image brouillée reçue en une chaine de caractères.

7. Dispositif pour prévoir une transmission par télécopie sécurisée d'un document, comprenant un dispositif de transmission (11) pour transmettre une télécopie d'un document, ledit dispositif de transmission (11) comprenant des moyens (12) de génération d'images pour générer au moins une image dudit document, une unité de cryptage (39) pour générer une chaine de caractères cryptée et des moyens de compression (14) pour comprimer ladite chaine de caractères générée après l'avoir converti en pixels, afin de créer une image brouillée à transmettre, ladite unité de cryptage (39) ayant une mémoire (42) pour enregistrer ladite au moins une image, des moyens de conversion pour lire les pixels de ladite au moins une image dans une série de bloques de taille prédéterminée et pour convertir ladite série de bloques en la chaine de caractères basé sur une table de conversion, et des moyens de cryptage (40) pour le cryptage de ladite chaine de caractères afin de créer une chaine de caractères cryptée,
**caractérisé en ce que** lesdits moyens de cryptage (40) sont adaptés à permettre une sélection entre un mode de cryptage standard, une image étant générée à partir du document entier par les moyens de génération d'images (12), et un mode de cryptage optimisé, une série d'images étant générée par les moyens de génération d'images (12), chaque image correspondant à une ligne du document, les pixels de chaque image de ladite série d'images étant lues dans une série de bloques de taille prédéterminée et ladite série de bloques correspondant à chaque image étant chacune convertie en une chaine de caractères par les moyens de conversion, résultant en une chaine de caractères par image, et uniquement des chaines de caractères correspondant à des images avec au moins un pixel non-blanc étant cryptées par les moyens de cryptage (40).

8. Dispositif selon la revendication 7, ledit dispositif de transmission (11) comprenant en outre une unité centrale de contrôle (22), particulièrement une unité centrale de traitement.

9. Dispositif selon la revendication 7 ou 8, comprenant en outre un dispositif de réception (11) pour recevoir une télécopie d'un document, ledit dispositif de réception (11) comprenant une mémoire (42) pour enregistrer une image brouillée reçue, des moyens de développement (14) pour développer ladite image brouillée reçue en une chaine de caractères, des moyens de décryptage (40) pour décrypter ladite chaine de caractères, des moyens de conversion pour convertir la chaine de caractères décryptée en une image du document et des moyens d'impression (28) pour imprimer ladite image du document.

10. Dispositif selon la revendication 9, ledit dispositif de réception (11) comprenant en outre une unité centrale de contrôle (22), particulièrement une unité centrale de traitement.
